Europäisches Patentamt

European Patent Office

Office européen des brevets

(11) Veröffentlichungsnummer: **0 197 610 B1**

(12) **EUROPÄISCHE PATENTSCHRIFT**

(45) Veröffentlichungstag der Patentschrift: **06.11.91**

(21) Anmeldenummer: **86200574.1**

(22) Anmeldetag: **04.04.86**

(51) Int. Cl.⁵: **G11B 15/675**

(54) **Aufzeichnungs- und/oder Wiedergabegerät.**

(30) Priorität: **10.04.85 AT 1084/85**

(43) Veröffentlichungstag der Anmeldung:
**15.10.86 Patentblatt 86/42**

(45) Bekanntmachung des Hinweises auf die
Patenterteilung:
**06.11.91 Patentblatt 91/45**

(84) Benannte Vertragsstaaten:
**DE FR GB IT**

(56) Entgegenhaltungen:
**EP-A- 0 091 808        DE-A- 2 749 843**
**DE-A- 2 749 889        DE-A- 3 014 073**
**FR-A- 2 415 857        GB-A- 2 024 493**
**GB-A- 2 039 128**

**PATENT ABSTRACTS OF JAPAN, Band 6, Nr.
225 (P-154)[1103], 10. November 1982; & JP-
A-57 127 953 (SONY K.K.) 09-08-1982**

(73) Patentinhaber: **N.V. Philips' Gloeilampenfabrieken**
**Groenewoudseweg 1**
**NL-5621 BA Eindhoven(NL)**

(72) Erfinder: **Fleck, Harald**
**INT. OCTROOIBUREAU B.V. Prof. Holstlaan 6**
**NL-5656 AA Eindhoven(NL)**
Erfinder: **Hütter, Heinrich**
**INT. OCTROOIBUREAU B.V. Prof. Holstlaan 6**
**NL-5656 AA Eindhoven(NL)**
Erfinder: **Jäger, Heimo**
**INT. OCTROOIBUREAU B.V. Prof. Holstlaan 6**
**NL-5656 AA Eindhoven(NL)**

(74) Vertreter: **Smit, Frederik Jan et al**
**INTERNATIONAAL OCTROOIBUREAU B.V.**
**Prof. Holstlaan 6**
**NL-5656 AA Eindhoven(NL)**

**Beschreibung**

Die Erfindung bezieht sich auf ein Aufzeichnungs- und/oder Wiedergabegerät für einen in einer Kassette untergebrachten Aufzeichnungsträger mit einer mindestens eine Hauptfläche und zwei Seitenflächen aufweisenden Kassettenaufnahme, die zwischen einer ersten Endposition und einer zweiten Endposition, von denen eine eine Ladeposition, in der eine mit ihren Hauptwänden parallel zu der Hauptfläche der Kassettenaufnahme ausgerichtete Kassette in die Kassettenaufnahme einschiebbar ist und in der eine eingeschobene Kassette mit einer Hauptwand an der Hauptfläche anliegt, und die andere eine Betriebsposition ist, parallel zu ihren Seitenflächen entlang einer zumindest teilweise quer zu ihrer Hauptfläche verlaufenden Bewegungsbahn verstellbar geführt ist und an der mindestens eine dieselbe von der ersten in die zweite Endposition verstellende und in der zweiten Endposition gegen mindestens einen Anschlag haltende Verstellfeder angreift und die mit einer lösbaren Arretiereinrichtung entgegen der Kraft der Verstellfeder in der ersten Endposition arretierbar ist.

Ein solches Gerät ist aus der DE-A-12 07 653 bekannt. Bei diesem bekannten Gerät ist die Kassettenaufnahme schachtförmig ausgebildet und weist zwei Hauptflächen und zwei diese miteinander verbindende Seitenflächen auf. Diese Kassettenaufnahme ist parallel zu ihren Seitenflächen entlang einer senkrecht zu ihren Hauptflächen verlaufenden Bewegungsbahn von der die erste Endposition bildenden Ladeposition in die die zweite Endposition bildende Betriebsposition mit zwei Verstellfedern verstellbar, die hierbei durch zwei einerseits an der Kassettenaufnahme und andererseits am Chassis eingehängte, senkrecht zu den Hauptflächen der Kassettenaufnahme verlaufende Zugfedern gebildet sind. Die Zugfedern sind relativ kurz ausgebildet, um den durch sie beanspruchten Raumbedarf in Richtung senkrecht zu den Hauptflächen der Kassettenaufnahme und damit die Bauhöhe des Gerätes klein zu halten, was bedingt, dass sie eine relativ steile Federkennlinie aufweisen und daher die von den Verstellfedern in ihrem gespannten bzw. entspannten Zustand, also bei in ihrer Ladeposition bzw. bei in ihrer Betriebsposition auf die Kassettenaufnahme ausgeübten Kräfte stark voneinander differieren. Dies hat aber zur Folge, dass beim Verstellen der Kassettenaufnahme von ihrer Betriebsposition in ihre Ladeposition die hierbei relativ stark zunehmenden Kräfte der Verstellfedern zu überwinden sind, wofür ein erheblicher Kraftaufwand erforderlich ist, was beim bekannten Gerät, bei dem die Kassettenaufnahme von Hand aus in ihre Ladeposition Verstellt wird, vom Benutzer als störend empfunden wird.

Um die vorstehend erwähnten Kräfteunterschiede klein zu halten, könnten auch Zugfedern mit grösserer Länge und daher flacherer Federkennlinie verwendet werden, die aber dann aufgrund ihrer Länge einen erheblichen Raumbedarf in Anspruch nehmen würden, was eine unerwünschte Vergrösserung der Bauhöhe des Gerätes zur Folge hätte.

Die Erfindung hat sich zur Aufgabe gestellt, die vorstehend angeführten Schwierigkeiten zu vermeiden und ein Gerät zu schaffen, bei dem auf einfache Weise eine möglichst geringe Bauhöhe erreicht wird und bei dem beim Verstellen der Kassettenaufnahme zwischen ihren beiden Endpositionen nur ein relativ geringer Unterschied zwischen den von mindestens einer Verstellfeder auf die Kassettenaufnahme ausgeübten Kräftenauftritt. Hierzu ist die Erfindung dadurch gekennzeichnet, dass an der Kassettenaufnahme mindestens eine senkrecht zu den Seitenflächen derselben verlaufende Welle drehbar gelagert ist, an der mindestens ein Zahnrad drehfest befestigt ist, das mit einer denselben Verlauf wie die Bewegungsbahn der Kassettenaufnahme aufweisenden Verzahnung in Eingriff steht, und dass die Verstellfeder durch eine mit Vorspannung um die Welle gewundene zylindrische Schraubendrehfeder gebildet ist, die mit ihrem einen Ende an der Kassettenaufnahme und mit ihrem anderen Ende an der Welle angreift und die nach dem Lösen der Arretiereinrichtung mit ihrer Vorspannung die Welle und das auf der Welle befestigte Zahnrad antreibt, wobei sich das Zahnrad an der Verzahnung abwälzt und die Kassettenaufnahme von der ersten Endposition in die zweite Endposition verstellt, Hierdurch ist auf einfache Weise erreicht, dass mit einem geringen Raumbedarf das Auslangen gefunden wird und damit eine geringe Bauhöhe des Gerätes gewährleistet ist, weil die senkrecht zu den Seitenflächen und damit parallel zu der Hauptfläche der Kassettenaufnahme verlaufende Welle samt der um sie gewundenen Schraubendrehfeder und dem mindestens einen an ihr befestigten Zahnrad so an der Kassettenaufnahme angeordnet werden können, dass sie keinen zusätzlichen Raumbedarf in Richtung senkrecht zu der Hauptfläche der Kassettenaufnahme in Anspruch nehmen. Ferner ist hierdurch erreicht, dass beim Verstellen der Kassettenaufnahme entgegen der Vorspannung der Schraubendrehfeder nur eine relativ geringe Kraftzunahme zu überwinden ist, weil auf der Welle eine relativ lange Schraubendrehfeder mit einer grossen Anzahl von Windungen Platz findet, die dann eine flache Federkennlinie aufweist und daher den Vorteil bietet, dass der Unterschied zwischen den Verstellkräften, die von der Schraubendrehfeder bei in der einen bzw. in der anderen Endposition befindlicher Kassettenaufnahme auf dieselbe ausgeübt werden, gering ist. Für den Fall, dass die Verstellung entgegen der Vorspannung der Schraubendrehfeder von Hand aus erfolgt, wird aufgrund der geringen Kraftzunahme eine für den Benutzer als angenehm und leichtgängig empfundene Verstellung der Kassettenaufnahme erreicht. Wenn diese Verstellung motorisch erfolgt, wird dadurch der Vorteil erreicht, dass mit einem geringen Energieverbrauch das Auslangen gefunden wird.

Zu erwähnen ist noch, dass es sowohl möglich ist, die Verstellung der Kassettenaufnahme von der Ladeposition in die Betriebsposition mit der vorgespannten Schraubendrehfeder, wie dies an sich von dem in der eingangs zitierten DE-A-12 07 653 beschriebenen Gerät bekannt ist, und die entgegengesetzte Verstellung von Hand aus oder motorisch vorzunehmen, als auch umgekehrt möglich ist, die Verstellung der Kassettenaufnahme von der Betriebsposition in die Ladeposition mit der vorgespannten Schraubendrehfeder und die entgegengesetzte Verstellung von Hand aus oder motorisch vorzunehmen. Bei einem Gerät, bei dem die Kassettenaufnahme parallel zu ihren Seitenflächen entlang einer im wesentlichen L-förmigen, von ihrer Ladeposition zuerst im wesentlichen parallel zu ihrer Hauptfläche und danach quer zu ihrer Hauptfläche bis zu ihrer Betriebsposition verlaufenden Bewegungsbahn verstellbar geführt ist, wird weiters der Vorteil erreicht, dass die von der Schraubendrehfeder beim Abwälzen des Zahnrades an der hierbei denselben L-förmigen Verlauf wie die Bewegungsbahn der Kassettenaufnahme aufweisenden Verzahnung auf die Kassettenaufnahme ausgeübten Verstellkräfte unabhängig von den beiden quer zueinander verlaufenden Verstellrichtungen, in denen die Verstellbewegung der Kassettenaufnahme erfolgt, stets praktisch zur Gänze in der jeweiligen Verstellrichtung wirksam sind, wodurch unabhängig von der Verstellrichtung stets ein guter Wirkungsgrad erreicht wird. Dieser Vorteil ist beispielsweise mit Zugfedern nicht erreichbar, weil diese bei Richtungsänderungen der Verstellbewegung der Kassettenaufnahme unterschiedlich grosse Kraftkomponenten auf dieselbe ausüben, wodurch der Wirkungsgrad vermindert wird.

Erwähnt sei noch, dass es beispielsweise aus dem in der DE-A1-32 38 510 beschriebenen Gerät an sich bekannt ist, eine Kassettenaufnahme entlang einer L-förmigen Bewegungsbahn verstellbar zu führen, wobei aber die Verstellung der Kassettenaufnahme von ihrer Ladeposition in ihre Betriebsposition als auch die entgegengesetzte Verstellung mittels eines Motors über ein Verstellgetriebe erfolgt. An dieser Stelle sei auch noch erwähnt, dass aus der DE-A1-30 14 073 ein Gerät bekannt ist, bei dem an der Kassettenaufnahme eine senkrecht zu den Seitenflächen derselben verlaufende Welle vorgesehen ist, an der zwei mit Verzahnungen zusammenwirkende Zahnräder drehfest befestigt sind. Die Welle ist dabei drehbar und senkrecht zu ihrer Längserstreckung gegenüber der Kassettenaufnahme verstellbar an derselben gelagert und von einem Motor her in beiden Drehrichtungen antreibbar und dient zum Verstellen einer an der Kassettenaufnahme vorgesehenen Einrichtung zum Hineinführen bzw. Herausführen einer Kassette in die bzw. aus der Kassettenaufnahme, die ihrerseits mit einem weiteren Motor in beiden Richtungen verstellbar ist. Demgegenüber ist beim erfindungsgemässen Gerät die Welle an der Kassettenaufnahme nur drehbar gelagert und in einer Drehrichtung von einer um sie gewundenen Schraubendrehfeder antreibbar und dient zum Verstellen der Kassettenaufnahme in einer Richtung. In der anderen Richtung wird die Kassettenaufnahme von einem Motor her verstellt, wobei die Welle in der anderen Drehrichtung gedreht und dabei die Schraubendrehfeder gespannt wird. Somit unterscheidet sich das erfindungsgemässe Gerät vom bekannten Gerät sowohl in der Lagerung der Welle an der Kassettenaufnahme als auch in deren Antrieb und deren Verwendungszweck. Wie bereits erwähnt, wird somit erfindungsgemäss unter anderem erreicht, dass durch das Vorsehen einer Schraubendrehfeder zum Verstellen der Kassettenaufnahme in der einen Richtung der Energieverbrauch das Motors zum Verstellen der Kassettenaufnahme in der anderen Richtung besonders gering ist.

An der Welle kann beispielsweise nur ein einziges mit einer Verzahnung kämmendes Zahnrad befestigt sein. Als vorteilhaft hat sich aber erwiesen, wenn an der an der Kassettenaufnahme drehbar gelagerten Welle im Bereich jeder Seitenfläche der Kassettenaufnahme ein mit einer denselben Verlauf wie die Bewegungsbahn der Kassettenaufnahme aufweisenden Verzahnung in Eingriff stehendes Zahnrad befestigt ist. Hierdurch ist auf einfache Weise und ohne separate Mittel erreicht, dass kein Verkanten der Kassettenaufnahme bei ihrer Verstellung möglich ist.

Bei der Montage der Kassettenaufnahme im Gerät muss vor dem Ineingriffbringen des mindestens einen Zahnrades mit der betreffenden Verzahnung die Schraubendrehfeder durch Verdrehen der Welle vorgespannt werden, was durch händisches oder motorisches Antreiben des Zahnrades erfolgen kann. Nachdem die Feder vorgespannt ist, muss die Welle gegen Verdrehen mit der vorgespannten Feder gesichert werden, solange sich das Zahnrad ausser Eingriff von der Verzahnung befindet, was durch händisches Festhalten des Zahnrades erfolgen kann. Dabei besteht aber die Gefahr, dass beim weiteren Hantieren zur Montage der Kassettenaufnahme das Zahnrad ungewollt losgelassen wird, was zur Folge hat, dass sich die Feder entspannt, so dass dann ein neuerliches Vorspannen der Feder erforderlich wird. Es hat sich daher als vorteilhaft erwiesen, wenn zum Blockieren des rotierenden Antreibens der Welle mit der vorgespannten Schraubendrehfeder ein zum Zusammenwirken mit einem mit der Welle verbundenen Anschlag vorgesehener, zwischen einer Blockierlage und einer Freigabelage verstellbarer Riegel an der Kassettenaufnahme vorgesehen ist, an dem sich in seiner Blockierlage unter der Vorspannung der Schraubendrehfeder der Anschlag abstützt und der in seiner Freigabelage den Anschlag freigibt. Der Riegel stellt eine zuverlässige Montagehilfe dar, mit dem ein ungewolltes Verdrehen der Welle mit der vorgespannten Schraubendrehfeder, bevor das mindestens eine Zahnrad mit der betreffenden Verzahnung in Eingriff steht, mit Sicherheit vermieden wird. Sobald das Zahnrad mit der Verzahnung in Eingriff gebracht ist, wird der Riegel von seiner Blockierlage in seine Freigabelage verstellt, wonach dann die Kassettenaufnahme entgegen der nunmehr freigegebenen Kraft der Schraubendrehfeder von der Arretiereinrichtung in der ersten Endposition festgehalten wird. Die Verstellung des Riegels in seine Freigabelage kann nach dem Ineingriffbringen des mindestens einen Zahnrades mit der betreffenden Verzahnung von Hand aus aber auch selbsttätig erfolgen.

Der Anschlag kann durch einen mit der Welle verbundenen, radial von derselben abstehenden Lappen gebildet sein. Auch kann der Anschlag durch einen auf einem Zahnrad exzentrisch angeordneten, parallel zur Welle verlaufenden Stift gebildet ein, der über das Zahnrad mit der Welle verbunden ist. Als vorteilhaft hat sich erwiesen, wenn der Riegel in seiner Blockierlage in eine Zahnlücke von dem mindestens einen an der Welle befestigten Zahnrad hineinragt und der Anschlag durch den an diese Zahnlücke angrenzenden, sich unter der Vorspannung der Schraubendrehfeder an dem Riegel abstützenden Zahn von dem mindestens einen Zahnrad gebildet ist. Hierdurch erübrigt sich das Vorsehen eines separaten Anschlages.

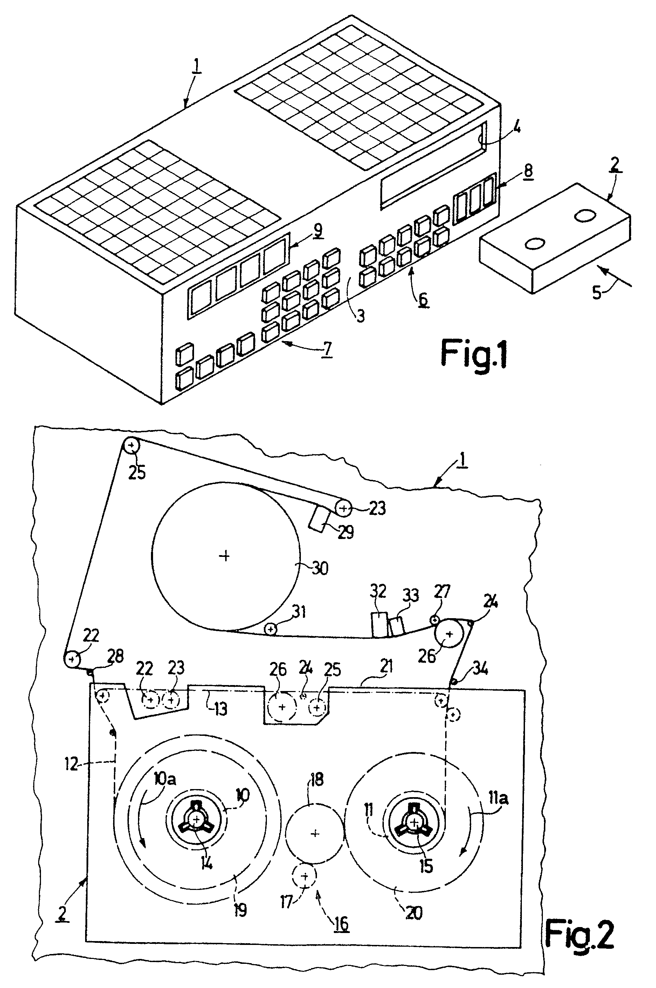

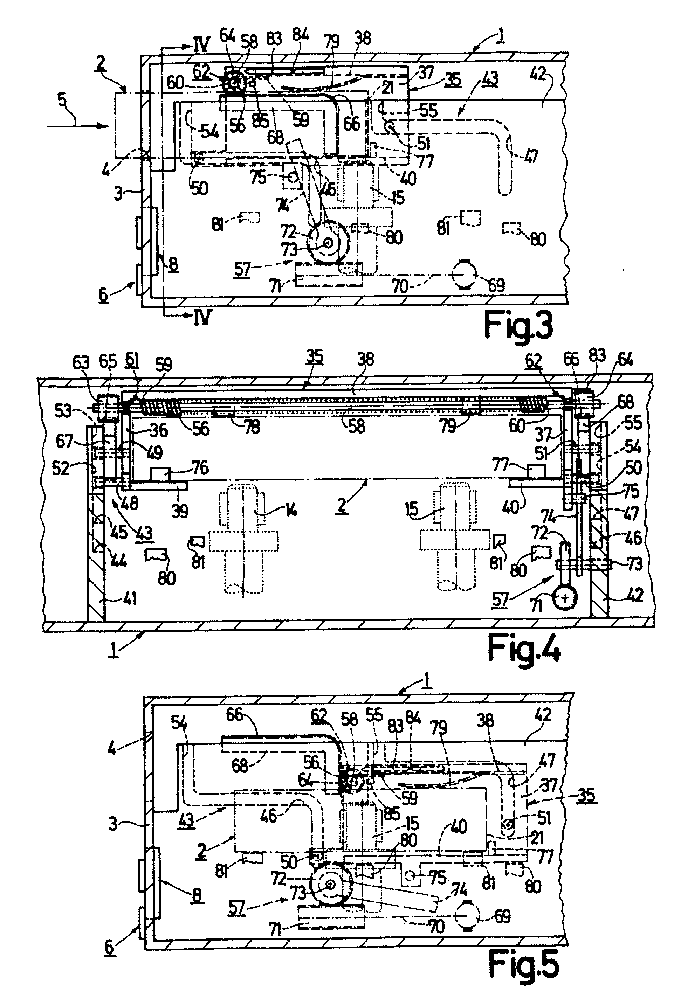

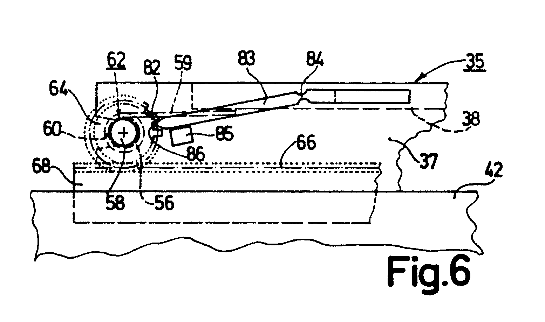

Die Erfindung wird im folgenden anhand eines in den Zeichnungen dargestellten Ausführungsbeispieles näher beschrieben, auf das dieselbe jedoch nicht beschränkt sein soll. Die Fig. 1 zeigt in einem verkleinerten Massstab schematisch in einer Schrägansicht ein Aufzeichnungs- und Wiedergabegerät für Fernsehsignale und Tonsignale, in das eine Kassette einsetzbar ist, die einen bandförmigen, zwischen zwei nebeneinander liegenden Wickelkernen verlaufenden, magnetisierbaren Aufzeichnungsträger enthält, auf dem Fernsehsignale in schräg zu seiner Längsrichtung verlaufenden Spuren mit rotierend antreibbaren Magnetköpfen speicherbar bzw. von demselben abtastbar sind. Die Fig. 2 zeigt schematisch einen Teil des Gerätes gemäss Fig. 1 in einem grösseren Massstab als in Fig. 1, wobei eine Kassette in ihre Betriebslage im Gerät gebracht ist und der Aufzeichnungsträger aus der Kassette herausgezogen und um Führungs- und Abtastelemente herumgeführt ist. Die Fig. 3 zeigt im gleichen Massstab wie in Fig. 2 bei weggeschnittener Gerätegehäuseseitenwand eine Seitenansicht eines Teiles des Gerätes mit einer Kassettenaufnahme für eine Kassette, wobei sich die Kassettenaufnahme in ihrer Ladeposition befindet. Die Fig. 4 zeigt im gleichen Massstab wie in Fig. 3 gemäss einem Schnitt längs der Linie IV-IV in Fig. 3 eine Vorderansicht des die Kassettenaufnahme enthaltenden Teiles des Gerätes, wobei sich die Kassettenaufnahme ebenfalls in ihrer Ladeposition befindet. Die Fig. 5 zeigt analog wie die Fig. 3 den die Kassettenaufnahme enthaltenden Teil des Gerätes, wobei sich die Kassettenaufnahme in ihrer Betriebsposition befindet. Die Fig. 6 zeigt in einer gegenüber Fig. 3 dreifachen Vergrösserung ein Detail der Kassettenaufnahme des Gerätes.

Die Fig. 1 zeigt ein Aufzeichnungs- und/oder Wiedergabegerät 1, das zum Aufzeichnen und Wiedergeben von Fernsehsignalen und Tonsignalen auf einem bandförmigen, magnetisierbaren Aufzeichnungsträger, im folgenden kurz Magnetband genannt, ausgebildet ist. Das Magnetband ist in einer in Fig. 1 schematisch dargestellten quaderförmigen Kassette 2 untergebracht, die zwei nebeneinander liegende Wickelkerne enthält, zwischen denen das Magnetband verläuft, und die durch eine in der Frontwand 3 des Gehäuses des Gerätes vorgesehen Öffnung 4 hindurch in Richtung des Pfeiles 5 in das Gerät 1 händisch einsetzbar ist. Beim Einsetzen der Kassette 2 in das Gerät wird dieselbe in eine verstellbare Kassettenaufnahme eingeschoben, deren Aufbau nachfolgend noch detailliert beschrieben ist. Mit der Kassettenaufnahme wird die Kassette nach dem vollständigen Einsetzen derselben in das Gerät teilweise senkrecht zu den Kassettenhauptwänden in eine in Fig. 2 schematisch angedeutete Betriebslage im Gerät abgesenkt. Zum Einschalten von Betriebsarten des Gerätes, wie "Aufnahme", "Wiedergabe im normalen Vorlauf", "Wiedergabe im normalen Rücklauf", "Schneller Vorlauf", "Schneller Rücklauf", "Wiedergabe bei Bandstillstand" und dgl., weist das Gerät 1 an der Frontwand 3 einen ersten Satz 6 von Bedienungstasten auf. Zum Vorprogrammieren des Gerätes und zum Eingeben von weiteren Daten, beispielsweise zum Einstellen einer Tageszeituhr, weist das Gerät 1 an der Frontwand 3 einen zweiten Satz 7 von Bedienungstasten auf. Ferner weist das Gerät 1 an der Frontwand 3 zwei Anzeigeeinheiten 8 und 9 auf, deren Anzeigestellen beispielsweise je aus sieben Segmenten aufgebaut sind und die beispielsweise zum Anzeigen von Zählwerkständen eines Zählwerkes zum Messen des Bandverbrauchs und zum Anzeigen von Uhrzeiten dienen.

Wie erwähnte wird eine in das Gerät eingesetzte Kassette 2 in eine Betriebslage abgesenkt. Wie in Fig. 2 schematisch gezeigt ist, treten hierbei mit den beiden nebeneinander liegenden, rotierend antreibbaren Wickelkernen 10 und 11, zwischen denen das Magnetband 12 innerhalb der Kassette 2 entlang dem teilweise durch eine strichpunktierte Linie 13 angegebenen Verlauf verläuft und auf die das Magnetband korrespondierend zu seiner jeweiligen Fortbewegungsrichtung wahlweise und in entgegengesetztem Wickelsinn, wie dies mit den Pfeilen 10a und 11a angegeben ist, aufwickelbar ist, zwei Wickeldorne 14 und 15 in Antriebsverbindung, so dass mit den Wickeldornen 14 und 15 die beiden koaxial auf dieselben aufgesetzten Wickelkerne 10 und 11 rotierend antreibbar sind. Zum Antreiben der beiden Wickeldorne 14 und 15 ist eine in Fig. 2 schematisch angedeutete Antriebseinrichtung 16 vorgesehen, deren von einem in entgegengesetzten Drehrichtungen motorisch antreibbaren, ortsfesten Treibrad 17 antreibbares, verschwenkbares Antriebsrad 18 korrespondierend zu seiner Drehrichtung wahlweise mit einem von zwei mit den Wickeldornen 14 und 15 drehfest verbundenen Wickeltellern 19 und 20 in Antriebsverbindung bringbar ist.

Beim Absenken der Kassette 2 in ihre Betriebslage wird ein an der Stirnseite 21 derselben vorgesehener, nicht dargestellter Kassettenverschlussdeckel geöffnet, wodurch eine Kassettenöffnung in der Stirnseite 21 freigegeben wird und treten vier Bandführungen 22, 23, 24 und 25 und eine Andruckrolle 26, die sich hierbei je in einer mit strichpunktierten Linien dargestellten Ruhelage befinden, in zwei Ausnehmungen der Kassette 2 ein, wobei sie den entlang der strichpunktierten Linie 13 verlaufenden Abschnitt des Magnetbandes 12 hintergreifen. Nach erfolgtem Absenken der Kassette in ihre Betriebslage sind die Bandführungen 22, 23, 24 und 25 je in ihre in Fig. 2 mit vollen Linien dargestellte Betriebslage verstellbar, wobei auch die Andruckrolle in eine in Fig. 2 nicht dargestellte Zwischenlage in unmittelbarer Nähe einer Bandantriebswelle 27 verstellbar ist. Dabei wird das Magnetband durch die Kassettenöffnung in der Stirnseite 21 der Kassette 2 hindurch aus derselben herausgeführt. Aus der Zwischenlage ist die Andruckrolle 26 in ihre in Fig. 2 dargestellte Betriebslage verstellbar, in der sie das Magnetband 12 an die Bandantriebswelle 27 andrückt. Da die Einrichtungen zum Öffnen des Kassettenverschlussdeckels, zum Verstellen der Bandführungen und der Andruckrolle und zum Andrücken der Andruckrolle an die Bandantriebswelle für die vorliegende Erfindung nicht wesentlich sind, sind diese auch der Einfachheit halber nicht dargestellt. Derartige Einrichtungen sind an sich aus bestehenden Geräten dieser Art allgemein bekannt.

Nach einer Verstellung der Bandführungen 22, 23, 24 und 25 und der Andruckrolle 26 in ihre Betriebslagen nimmt das Magnetband 12 den in Fig. 2 mit einer vollen Linie dargestellten Verlauf ein. Dabei erstreckt sich das Magnetband vom Wickelkern 10 über zwei in der Kassette enthaltene Bandführungen, einen Bandspannungsfühler 28, die verstellbaren Bandführungen 22, 25 und 23, einen ortsfesten Magnetkopf 29 zum Löschen aller auf dem Magnetband aufgezeichneten Signale, eine trommelförmige Abtasteinheit 30, die rotierend antreibbare Magnetköpfe zum Aufzeichnen und Wiedergeben von Fernsehsignalen in und aus schräg zur Längsrichtung des Magnetbandes verlaufenden, nebeneinander liegenden Spuren enthält, eine ortsfeste Bandführung 31, einen ortsfesten Magnetkopf 32 zum Löschen von Tonsignalen in einer in Längsrichtung des Magnetbandes verlaufenden Tonspur, einen weiteren ortsfesten Magnetkopf 33 zum Aufzeichnen und Wiedergeben von Tonsignalen in der Tonspur und zum Aufzeichnen und Wiedergeben von Synchronisationssignalen in einer in Längsrichtung des Magnetbandes und parallel neben der Tonspur verlaufenden Synchronspur, die Bandantriebswelle 27, an die das Magnetband 12 mit der Andruckrolle 26 angedrückt ist, die verstellbare Bandführung 24, eine ortsfeste Bandführung 34 und zwei weitere in der Kassette enthaltene Bandführungen bis zum Wickelkern 11. Sobald das Magnetband den vorstehend beschriebenen Verlauf einnimmt, wobei sich selbstverständlich die Kassettenaufnahme in ihrer Betriebsposition befindet, kann in bekannter Weise ein Aufzeichnungs- oder Wiedergabevorgang von Fernsehsignalen und Tonsignalen erfolge.

Wie bereits erwähnt, weist das Gerät 1 zum Überführen einer in das Gerät händisch eingeschobenen Kassette 2 in ihre Betriebslage eine verstellbare Kassettenaufnahme auf. Wie aus den Fig. 3 bis 5 ersichtlich ist, ist die Kassettenaufnahme 35 im wesentlichen schachtförmig ausgebildet und weist zwei Hauptflächen und zwei Seitenflächen auf. Die beiden Seitenflächen sind durch zwei Seitenwände 36 und 37 festgelegt. Die von den Wickeldornen 14 und 15 abgewandte obere Hauptfläche ist durch eine die beiden Seitenwände 36 und 37 miteinander verbindende, durchgehende Deckenwand 38 festgelegt. Die den Wickeldornen 14 und 15 zugewandte untere Hauptfläche ist durch zwei von den Seitenwänden 36 und 37 abgewinkelte, zueinander hin gerichtete Bodenwandabschnitte 39 und 40 gebildet. Die Kassettenaufnahme 35 ist einstückig aus Kunststoff hergestellt. Selbstverständlich könnte die Kassettenaufnahme auch anders ausgebildet sein und beispielsweise eine durchgehende, mit Durchbrüchen zum Durchtritt der Wickeldorne versehene Bodenwand und zwei von derselben nach oben abstehende Seitenwände aufweisen, ohne dass eine Deckenwand vorgesehen ist.

Die Kassettenaufnahme 35 ist zwischen einer ersten Endposition, die in vorliegendem Fall durch die in Fig. 3 dargestellte Ladeposition gebildet ist, und einer zweiten Endposition, die durch die in Fig. 5 dargestellte Betriebsposition gebildet ist, parallel zu ihren Seitenflächen 36 und 37 entlang einer zumindest teilweise quer zu ihren Hauptflächen 38 und 39, 40 verlaufenden Bewegungsbahn verstellbar geführt. Die Bewegungsbahn weist dabei einen L-förmigen Verlauf auf, wobei die Kassettenaufnahme von ihrer in Fig. 3 dargestellten Ladeposition zuerst parallel zu ihren Hauptflächen und danach senkrecht zu ihren Hauptflächen bis in ihre in Fig. 5 dargestellte Betriebsposition verstellbar geführt ist. Zum Führen der Kassettenaufnahme 35 entlang dieser L-förmigen Bewegungsbahn ist zwischen der Kassettenaufnahme und zwei im Gerät feststehenden, parallel zu den Seitenwänden 36 und 37 verlaufenden Führungsplatten 41 und 42 eine Führungseinrichtung 43 vorgesehen. Die Führungseinrichtung 43 vorgesehen. Die Führungseinrichtung 43 weist in jeder Führungsplatte 41 bzw. 42 zwei die L-förmige Bewegungsbahn festlegende L-förmige Führungsnuten 44 und 45 bzw. 46 und 47 auf. Ferner weist die Führungseinrichtung 43 an jeder Seitenwand 36 bzw. 37 zwei in dieselbe eingesetzte Führungsstifte 48 und 49 bzw. 50 und 51 auf, die mit ihren freien Enden in die Führungsnuten 44 und 45 bzw. 46 und 47 ragen. Um die Kassettenaufnahme 35 bei ihrer Montage im Gerät mit ihren Führungsstiften 48, 49, 50 und 51 einfach in die Führungsnuten 44, 45, 46 und 47 einsetzen zu können, weisen die Führungsnuten an ihren der Frontwand 3 zugewandten Enden je eine abgewinkelte Verlängerungsnut 52, 53, 54 bzw. 55 auf, die sich bis zum Ende der Führungsplatten 41 und 42 erstrecken und in deren offene Enden bei der Montage der Kassettenaufnahme die Führungsstifte einfach von oben her einführbar sind.

An der Kassettenaufnahme 35 greift eine dieselbe von der Ladeposition in die Betriebsposition verstellende Verstellfeder 56 und andererseits eine dieselbe von der Betriebsposition in die Ladeposition verstellende Antriebseinrichtung 57 an.

Die Verstellfeder 56 ist durch eine mit Vorspannung um eine senkrecht zu den Seitenflächen 36 und 37 der Kassettenaufnahme 35 verlaufende Welle 58 gewundene zylindrische Schraubendrehfeder gebildet, wobei der Windungssinn gemäss den Fig. 3, 5 und 6 entgegen dem Uhrzeigersinn gewählt ist. Das gemäss Fig. 4 linke Ende 59 der Schraubendrehfeder 56, das gegenüber den Windungen derselben quer zur Welle 58 abstehend ausgebildet ist, greift an der Deckenwand 38 der Kassettenaufnahme 35 an und stützt sich an derselben von unten her ab. Das gemäss Fig. 4 rechte Ende 60 der Schraubendrehfeder 56 greift an der Welle 58 an und ist an der Welle 58 festgeschweisst. Die Welle 58 ist, wie aus Fig. 6 deutlich hervorgeht, in je eine zur Frontwand 3 hin teilweise offene Lagerstelle 61 bzw. 62 in einer Seitenwand 36 bzw. 37 eingeschnappt und auf diese Weise an der Kassettenaufnahme 35 drehbar gelagert. Im Bereich jeder durch eine Seitenwand 36 bzw. 37 festgelegten Seitenfläche der Kassettenaufnahme 35 ist ein Zahnrad 63 bzw. 64 an der Welle 58 befestigt. Jedes Zahnrad 63 bzw. 64 steht mit einer denselben L-förmigen Verlauf wie die Bewegungsbahn der Kassettenaufnahme 35 aufweisenden Verzahnung 65 bzw. 66 in Eingriff, die je an einer an einer Führungsplatte 41 bzw. 42 befestigten L-förmigen Leiste 67 bzw. 68 vorgesehen ist. Die vorgespannte Schraubendrehfeder 56 trachtet danach, mit ihrer Vorspannung die Welle 58 und die daran befestigten Zahnräder 63 und 64 gemäss Fig. 3 im Uhrzeigersinn anzutreiben. Ein solches Antreiben hat zur Folge, dass sich die Zahnräder 63 und 64 an den Verzahnungen 65 und 66 abwälzen und hierbei die Kassettenaufnahme 35 von der Ladeposition in die Betriebsposition verstellen. Das Abwälzen der Zahnräder an den Verzahnungen und die dadurch bewirkte Verstellung der Kassettenaufnahme ist aber nur nach dem Lösen einer Arretiereinrichtung, welche die Kassettenaufnahme in der Ladeposition entgegen der Kraft der Schraubendrehfeder arretiert, möglich, wie nachfolgend noch beschrieben ist.

Die vorerwähnte Antriebseinrichtung 57 weist einen in entgegengesetzten Drehrichtungen antreibbaren Motor 69 auf, der über eine schematisch mit einer strichpunktierten Linie dargestellte Antriebsverbindung 70, die beispielsweise durch ein Zahnraduntersetzungsgetriebe gebildet ist, eine Schnecke 71 antreibt. Die Schnecke 71 treibt ein Schneckenrad 72 an, das auf einem Wellenstumpf 73 drehfest befestigt ist. Der Wellenstumpf 73 ist in der Führungsplatte 42 drehbar gelagert. Auf dem Wellenstumpf 73 ist ferner ein Verstellhebel 74 drehfest befestigt, der mit einem von der Seitenwand 37 abstehenden Verstellstift 75 zusammenwirkt. Auf diese Weise greift die Antriebseinrichtung 57 mit ihrem Verstellhebel 74 über den Verstellstift 75 an der Kassettenaufnahme 35 an. Bei in ihrer Ladeposition befindlicher Kassettenaufnahme ist der Verstellstift 75 unter der Kraft der Schraubendrehfeder 56, die wie erwähnt danach trachtet, die Kassettenaufnahme aus ihrer Ladeposition zu verstellen, an den Verstellhebel 74 angelegt gehalten, der seinerseits über den selbsthemmenden Schneckenantrieb 71, 72 festgehalten ist. Somit bildet in diesem Fall die Antriebseinrichtung 57 die vorerwähnte lösbare Arretiereinrichtung, die die Kassettenaufnahme entgegen der Kraft der Schraubendrehfeder 56 in ihrer Ladeposition arretiert. Selbstverständlich könnte aber auch eine separate lösbare Arretiereinrichtung vorgesehen sein, beispielsweise ein händisch oder elektromagnetisch verstellbarer Riegel, mit dem die Kassettenaufnahme in ihrer Ladeposition arretiert wird.

Wenn sich die Kassettenaufnahme 35 in ihrer in den Fig. 3 und 4 dargestellten Ladeposition befindet, ist eine Kassette 2, die mit ihren Hauptwänden parallel zu den durch die Deckenwand 38 und die Bodenwandabschnitte 39 und 40 festgelegten Hauptflächen der Kassettenaufnahme und mit ihren kurzen Seitenwänden parallel zu den Seitenwänden 36 und 37 der Kassettenaufnahme ausgerichtet ist, in die Kassettenaufnahme in Richtung des Pfeiles 5 von Hand aus einschiebbar. Dieses Einschieben ist solange möglich, bis die Kassette 2 mit ihrer Stirnseite 21 gegen zwei Lappen 76 und 77 stösst, die von den Bodenwandabschnitten 39 und 40 in Richtung zur Deckenwand 38 abstehen. Auf eine eingeschobene Kassette 2 drücken von oben her zwei an der Deckenwand 38 durch Kleben oder Ultraschallschweissen befestigte metallene Blattfedern 78 und 79, so dass die eingeschobene Kassette bei in ihrer Ladeposition befindlicher Kassettenaufnahme sicher mit ihrer unteren Hauptwand an der durch die Bodenwandabschnitte 39 und 40 festgelegten Hauptfläche der Kassettenaufnahme anliegt. Diese Situation ist in den Fig. 3 und 4 dargestellt, wobei die Kassette 2 der Übersichtlichkeit halber nur mit einer strichpunktierten Linie angedeutet ist.

Nachdem eine Kassette 2 vollständig in die Kassettenaufnahme 35 eingeschoben ist, wird der Motor 69 der Antriebseinrichtung 57 eingeschaltet, was dem Lösen der durch die Antriebseinrichtung gebildeten Arretiereinrichtung entspricht. Dies kann durch Betätigen einer Taste des Tastensatzes 6 oder auch selbsttätig über einen von der vollständig eingeschobenen Kassette auslösbaren Fühlschalter, wie ein Mikroschalter oder ein Lichtschrankenschalter, erfolgen. Die Drehrichtung des Motors 69 ist dabei selbstverständlich so gewählt, dass er den Verstellhebel 74 gemäss Fig. 3 im Uhrzeigersinn antreibt. Hierdurch wird der Verstellstift 75 und folglich die gesamte Kassettenaufnahme 35 zur Verstellung mit der Schraubendrehfeder 56 freigegeben. Die vorgespannte Schraubendrehfeder 56 treibt mit ihrer Vorspannung die Welle 58 und die beiden Zahnräder 63 und 64 gemäss Fig. 3 im Uhrzeigersinn an, so dass sich die Zahnräder 63 und 64 an den feststehenden Verzahnungen 65 und 66 abwälzen und dabei die entlang der L-förmigen Bewegungsbahn geführte Kassettenaufnahme 35 von ihrer in den Fig. 3 und 4 dargestellten Ladeposition in ihre in Fig. 5 dargestellte Betriebsposition verstellen, wobei sich der Verstellstift 75 am Verstellhebel 74 abstützt. Hierdurch wird eine durch die Verstellbewegung des motorisch angetriebenen Verstellhebels 74 bestimmte gleichmässige Verstellbewegung für die Kassettenaufnahme 35 erreicht, wobei die Schraubendrehfeder 56 die Verstellkräfte liefert. In der Betriebsposition der Kassettenaufnahme 35 stösst dieselbe mit ihren beiden Bodenwandabschnitten 39 und 40 gegen vier je mit dem Bezugszeichen 80 bezeichnete Anschläge, die die Betriebsposition festlegen, und die Schraubendrehfeder 56 hält mit ihrer Vorspannung die Kassettenaufnahme gegen die Anschläge 80 sicher angelegt. Bei in der Betriebsposition gehaltener Kassettenaufnahme 35 wird die hierbei in ihrer Betriebslage befindliche Kassette 2 von vier je mit dem Bezugszeichen 81 bezeichneten Positionieranschlägen unterstützt, wobei die Kassette 2 mit den Blattfedern 78 und 79 sicher an die Positionieranschläge 81 angelegt gehalten ist. Nachdem die Kassettenaufnahme ihre Betriebsposition erreicht hat, in der sie mit der Schraubendrehfeder 56 auch sicher festgehalten wird, wird der Motor 69 noch kurzzeitig weiter angetrieben, so dass der Verstellhebel 74 vom Verstellstift 75 abhebt, wie dies in Fig. 5 dargestellt ist. Erst danach wird der Motor 69 abgeschaltet, beispielsweise durch einen vom Verstellhebel 74 in dessen in Fig. 5 dargestellter Endlage betätigten nicht dargestellten Endschalter.

Um die Kassettenaufnahme 35 von ihrer Betriebsposition in ihre Ladeposition zurückzuverstellen, wird der Motor 69 beispielsweise durch Betätigen einer weiteren Taste des Tastensatzes 6 in der entgegengesetzten Drehrichtung wie vorstehend beschrieben angetrieben, wodurch der Verstellhebel 74 gemäss Fig. 5 entgegen dem Uhrzeigersinn angetrieben wird und dieser über den Verstellstift 75 die Kassettenaufnahme entgegen der Kraft der Schraubendrehfeder 56 entlang der L-förmigen Bewegungsbahn in ihre Ladeposition zurückverstellt. Sobald die Kassettenaufnahme ihre in Fig. 3 dargestellte Ladeposition erreicht hat, wird der Motor 69 abgeschaltet, beispielsweise durch einen vom Verstellhebel 74 in dessen in Fig. 3 dargestellter Endlage oder von der Kassettenaufnahme betätigten Endschalter. Die Ladeposition der Kassettenaufnahme 35 ist daher durch die als Arretiereinrichtung verwendete Antriebseinrichtung 57 über deren Verstellhebel 74 festgelegt.

Wie aus den Fig. 3 bis 6 ersichtlich ist, nimmt die Welle samt der um sie gewundenen Schraubendrehfeder und den beiden an ihr befestigten Zahnrädern praktisch keinen zusätzlichen Raumbedarf in Anspruch, was im Hinblick auf eine kompakte Ausbildung und auf eine möglichst geringe Bauhöhe des Gerätes, wie sie vor allem bei einem wie vorliegenden Frontladegerät gefordert wird, vorteilhaft ist. Wie ferner insbesondere aus Fig. 4 ersichtlich ist, findet auf der Welle eine relativ lange Schraubendrehfeder mit einer grossen Anzahl von Windungen Platz, die dann vorteilhafterweise eine flache Kennlinie aufweist und daher den Vorteil bietet, dass der Unterschied zwischen den Kräften, die von der Schraubendrehfeder in der Ladeposition bzw. in der Betriebsposition auf die Kassettenaufnahme ausgeübt werden, gering ist. Hierdurch ist vorteilhafterweise erreicht, dass beim Verstellen der Kassettenaufnahme entgegen der Kraft der Schraubendrehfeder von der Betriebsposition in die Ladeposition nur eine relativ geringe Kraftzunahme zu überwinden ist, so dass mit einem relativ geringen Energieverbrauch durch den Motor das Auslangen gefunden wird. Da die Verstellkräfte der Schraubendrehfeder über die sich an den Verzahnungen abwälzenden Zahnräder wirksam werden, wird der Vorteil erhalten, dass unabhängig von der Richtung der L-förmig verlaufenden Verstellbewegung der Kassettenaufnahme die Verstellkräfte stets in der jeweiligen Richtung der Verstellbewegung zur Wikrung kommen, so dass ein guter Wirkungsgrad erreicht wird. Durch das Vorsehen von zwei an den Enden der Welle befestigten Zahnrädern ist ein Verkanten der Kassettenaufnahme bei deren Verstellung mit Sicherheit vermieden, weil dies durch den formschlüssigen Eingriff der Zahnräder in die Verzahnungen unmöglich gemacht ist. Somit erfüllen die mit den Verzahnungen in Eingriff stehenden Zahnräder zusätzlich zu ihrer Verstellfunktion auch eine Führungsfunktion für die Kassettenaufnahme.

Bei vorliegenden Gerät hat es sich als günstig erwiesen, eine Schraubendrehfeder mit etwa 300 Windungen vorzusehen. Zur Erzielung einer geeigneten Vorspannung dieser Schraubendrehfeder wird die Welle nach ihrer Anbringung an der Kassettenaufnahme um etwa 30 Umdrehungen im Windungssinn dieser Feder gedreht, was beispielsweise durch händisches oder motorisches Antreiben eines der beiden Zahnräder erfolgen kann. Beim Verstellen der Kassettenaufnahme von der Ladeposition in die Betriebsposition dreht sich die Welle samt den Zahnrädern um etwa 3 Umdrehungen, was bedeutet, dass die Vorspannung der Schraubendrehfeder lediglich um etwa 10% sinkt.

Das Vorspannen der Schraubendrehfeder 56 muss selbstverständlich erfolgen, bevor die Zahnräder 63 und 64 mit den Verzahnungen 65 und 66 in Eingriff stehen, also vor der Montage der Kassettenaufnahme 35 im Gerät. Wie erwähnt, erfolgt das Vorspannen durch Verdrehen der Welle 58 im Windungssinn der Schraubendrehfeder, also gemäss Fig. 6 entgegen dem Uhrzeigersinn. Nach dem Vorspannen der Schraubendrehfeder 56 muss dafür gesorgt werden, dass sich dieselbe nicht mehr entspannt, bevor die Zahnräder 63 und 64 mit den Verzahnungen 65 und 66 in Eingriff stehen. Hierfür ist bei vorliegendem Gerät, wie Fig. 6 in vergrössertem Massstab deutlich zeigt, zum Blockieren des rotierenden Antreibens der Welle 58 mit der vorgespannten Schraubendrehfeder 56 ein zum Zusammenwirken mit einem mit der Welle 58 verbundenen Anschlag 82 vorgesehener, zwischen einer in Fig. 6 dargestellten Blockierlage und einer in den Fig. 3, 4 und 5 dargestellten Freigabelage verstellbarer Riegel 83 an der Kassettenaufnahme 35 vorgesehen. Der Riegel 83 ist durch einen einstückig mit der Kassettenaufnahme 35 verbundenen, an der Seitenwand 37 vorgesehenen, parallel zu dieser Seitenwand um ein Filmscharnier 84 verschwenkbaren Hebel gebildet, an dessen freien Ende sich in seiner Blockierlage unter der Vorspannung der Schraubendrehfeder 56 der Anschlag 82 abstützt, wobei sich der Riegel 83 seinerseits an einem von der Seitenwand 37 abstehenden Gegenanschlag 85 abstützt. In seiner Freigabelage ist der Riegel 83 aus der Bewegungsbahn des Anschlages 82 verstellt, so dass der Riegel 83 den Anschlag 82 freigibt. Wie Fig. 6 zeigt, ragt der Riegel 83 mit seinem freien Ende in seiner Blockierlage in eine Zahnlücke 86 von dem an der Welle 58 befestigten Zahnrad 64 hinein und ist der Anschlag 82 durch den an die Zahnlücke 86 angrenzenden, sich unter der Vorspannung der Schraubendrehfeder 56 an dem freien Ende des Riegels 83 abstützenden Zahn dieses Zahnrades 64 gebildet.

Nach dem Vorspannen der Schraubendrehfeder 56 durch Verdrehen des Zahnrades 64 im Windungssinn dieser Feder wird der Riegel 83 beispielsweise von Hand aus oder auf mechanisierte Weise von seiner Freigabelage in seine Blockierlage verstellt, in der er sich am Gegenanschlag 85 abstützt und in der er mit der Vorspannung der Schraubendrehfeder gehalten wird. Auf diese Weise ist die Schraubendrehfeder 56 sicher gegen unbeabsichtigtes Entspannen gesichert. Bei der Montage der Kassettenaufnahme 35 im Gerät wird nach dem Ineingriffbringen der Zahnräder 63 und 64 mit den Verzahnungen 65 und 66 und dem Montieren der Antriebseinrichtung 57, wobei diese ihre in Fig. 3 dargestellte Lage einnimmt, der Riegel 83 beispielsweise händisch aus seiner Blockierlage in seine Freigabelage verstellt, wonach dann der Riegel wirkungslos ist und die Kassettenaufnahme von der als Arretiereinrichtung wirksamen Antriebseinrichtung in ihrer Ladeposition gehalten wird.

Der Riegel stellt eine einfache und zuverlässige Montagehilfe dar, mit dem ein ungewolltes Verdrehen der Welle und der Zahnräder mit der vorgespannten Schraubendrehfeder mit Sicherheit vermieden wird, bevor die Zahnräder mit den Verzahnungen in Eingriff stehen. Dadurch, dass als mit dem Riegel zusammenwirkender Anschlag einer der Zähne eines Zahnrades ausgenützt ist, ist ein einfacher Aufbau erreicht und die Welle ist vorteilhafter Weise in einer der Anzahl der Zähne des Zahnrades entsprechenden Vielzahl von Stellungen blockierbar.

Selbstverständlich sind im Rahmen der Erfindung noch eine Reihe von Abwandlungen möglich. Beispielsweise kann eine Kassettenaufnahme auch nur senkrecht zu ihren Hauptflächen verstellbar geführt sein. Bei einer Kassettenaufnahme, die aus ihrer Ladeposition zuerst im wesentlichen parallel zu ihren Hauptflächen verstellbar geführt ist, kann diese Verstellbewegung zumindest teilweise auch eine geringfügige Komponente in Richtung senkrecht zu den Hauptflächen der Kassettenaufnahme beinhalten. Eine Kassettenaufnahme kann auch aus zwei in je einer Führungsplatte geführte, nicht miteinander verbundene U-förmige Kassettenträger bestehen, deren Stegwände die Seitenflächen der Kassettenaufnahme und deren Schenkelwände die Hauptflächen der Kassettenaufnahme festlegen. An einer Kassettenaufnahme können beispielsweise auch zwei Wellen mit je mindestens einer um sie gewundenen Schraubendrehfeder vorgesehen sein. Ferner kann an einer Welle auch nur ein einziges mit einer Verzahnung in Eingriff stehendes Zahnrad befestigt sein, das mittig zwischen den beiden Seitenflächen der Kassettenaufnahme liegt, und zu beiden Seiten dieses Zahnrades kann je eine Schraubendrehfeder um die Welle gewunden sein. Das an der Welle angreifende Ende einer Schraubendrehfeder kann auch von den Windungen derselben in einer parallel zur Welle verlaufenden Richtung abgebogen werden und durch eine Bohrung einer auf die Welle aufgepressten Scheibe hindurchgeführt sein. Der Riegel zum Verhindern des ungewollten Entspannens der Schraubendrehfeder kann auch als an der Kassettenaufnahme verschiebbar geführter Schieber ausgebildet sein. Das Lösen des Riegels bei dem als Ausführungsbeispiel beschriebenen Gerät kann, nachdem die Zahnräder mit den Verzahnungen in Eingriff gebracht sind, auch selbsttätig erfolgem und zwar dadurch, dass die Kassettenaufnahme geringfügig zur Frontwand des Gerätes hin verstellt wird, wodurch die mit den Verzahnungen in Eingriff stehenden Zahnräder entgegen der Vorspannung der Schraubendrehfeder etwas verdreht werden, wobei der Riegel mitgenommen wird und ausser Eingriff von den Zähnen des einen Zahnrades kommt und durch die Federwirkung des Filmscharniers in seine Freigabelage verstellt und darin gehalten wird. Bei dem als Ausführungsbeispiel beschriebenen Gerät handelt es sich um ein Gerät für Kassetten mit einem bandförmigen Aufzeichnungsträger. Selbstverständlich sind die erfindungsgemässen Massnahmen auch in Geräten anwendbar, die zum Zusammenwirken mit Kassetten, in denen ein scheibenförmiger Aufzeichnungsträger untergebracht ist, ausgebildet sind.

## Patentansprüche

1. Aufzeichnungs- und/oder Wiedergabegerät für einen in einer Kassette (2) untergebrachten Aufzeichnungsträger mit einer mindestens eine Hauptfläche (38, 39, 40) und zwei Seitenflächen (36, 37) aufweisenden Kassettenaufnahme (35), die zwischen einer ersten Endposition und einer zweiten Endposition, von denen eine eine Ladeposition, in der eine mit ihren Hauptwänden parallel zu der Hauptfläche (38, 39, 40) der Kassettenaufnahme ausgerichtete Kassette (2) in die Kassettenaufnahme (35) einschiebbar ist und in der eine eingeschobene Kassette mit einer Hauptwand an der Hauptfläche (39, 40) anliegt, und die andere eine Betriebsposition ist, parallel zu ihren Seitenflächen (36, 37) entlang einer zumindest teilweise quer zu ihrer Hauptfläche verlaufenden Bewegungsbahn verstellbar geführt ist und an der mindestens eine dieselbe von der ersten in die zweite Endposition verstellende und in der zweiten Endposition gegen mindestens einen Anschlag (80) haltende Verstellfeder (56) angreift und die mit einer lösbaren Arretiereinrichtung entgegen der Kraft der Verstellfeder (56) in der ersten Endposition arretierbar ist, dadurch gekennzeichnet, dass an der Kassettenaufnahme (35) mindestens eine senkrecht zu den Seitenflächen (36, 37) derselben verlaufende Welle (58) drehbar gelagert ist, an der mindestens ein Zahnrad (63, 64) drehfest befestigt ist, das mit einer denselben Verlauf wie die Bewegungsbahn der Kassettenaufnahme (35) aufweisenden Verzahnung (65, 66) in Eingriff steht, und dass die Verstellfeder (56) durch eine mit Vorspannung um die Welle (58) gewundene zylindrische Schraubendrehfeder gebildet ist, die mit ihrem einen Ende (59) an der Kassettenaufnahme (35) und mit ihrem anderen Ende (60) an der Welle (58) angreift und die nach dem Lösen der Arretiereinrichtung (57) mit ihrer Vorspannung die Welle (58) und das auf der Welle befestigte Zahnrad (63, 64) antreibt, wobei sich das Zahnrad an der Verzahnung (65, 66) abwälzt und die Kassettenaufnahme (35) von der ersten Endposition in die zweite Endposition verstellt.

2. Gerät nach Anspruch 1, dadurch gekennzeichnet, dass an der an der Kassettenaufnahme (35) drehbar gelagerten Welle (58) im Bereich jeder Seitenfläche (36, 37) der Kassettenaufnahme (35) ein mit einer denselben Verlauf wie die Bewegungsbahn der Kassettenaufnahme

(35) aufweisenden Verzahnung (65, 66) in Eingriff stehendes Zahnrad (63, 64) befestigt ist (Fig. 3, 4, 5, 6).

3. Gerät nach Anspruch 1 oder 2, dadurch gekennzeichnet, dass zum Blockieren des rotierenden Antreibens der Welle (58) mit der vorgespannten Schraubendrehfeder (56) ein zum Zusammenwirken mit einem mit der Welle (58) verbundenen Anschlag (82) vorgesehener, zwischen einer Blockierlage und einer Freigabelage verstellbarer Riegel (83) an der Kassettenaufnahme (35) vorgesehen ist, an dem sich in seiner Blockierlage unter der Vorspannung der Schraubendrehfeder (56) der Anschlag (82) abstützt und der in seiner Freigabelage den Anschlag (82) freigibt (Fig. 3, 4, 5, 6).

4. Gerät nach Anspruch 3, dadurch gekennzeichnet, dass der Riegel (83) in seiner Blockierlage in eine Zahnlücke (86) von dem mindestens einen an der Welle (58) befestigten Zahnrad (64) hineinragt und der Anschlag (82) durch den an diese Zahnlücke angrenzenden, sich unter der Vorspannung der Schraubendrehfeder (56) an dem Riegel (83) abstützenden Zahn von dem mindestens einen Zahnrad (64) gebildet ist (Fig. 6).

## Claims

1. A recording and/or reproducing apparatus for a record carrier arranged in a cassette (2), the apparatus comprising a cassette holder (35) which comprises at least one main surface (38, 39, 40) and two side surfaces (36, 37) and which is guided so as to be movable between a first end position and a second end position in a direction parallel to its side surfaces (36, 37) along a path of movement which extends at least partly transversely of its main surface, one end position being a loading position, in which a cassette (2) aligned in such a way that its main surfaces extend parallel to the main surface (38, 39, 40) of the cassette holder can be inserted into the cassette holder (35) and in which a main surface of an inserted cassette is positioned against the holder main surface (39, 40), and the other end position being an operating position, at least one actuating spring (56) acting on said holder to move it from the first end position to the second end position and to urge it against at least one stop (80) in the second end position, which holder can be latched in the first end position against the force of the actuating spring (56) by means of a disengageable latching device, characterized in that at least one spindle (58) which extends perpendicularly to the side surfaces (36, 37) of the cassette holder (35) is rotatably mounted on said holder and is rotationally locked to at least one gear wheel (63, 64) which meshes with a toothed portion (65, 66) having the same shape as the path of movement of the cassette holder, and the actuating spring (56) is a cylindrical helical spring which is wound around the spindle (58) with pretension, which spring acts on the cassette holder (35) with its one end (59) and on the spindle (58) with its other end (60) and after the release of the latching device (57) drives the spindle (58) and the gear wheel (63, 64) on said spindle under the influence of its pretension, the gear wheel meshing with the toothed portions (65, 66) to move the cassette holder (35) from the first end position into the second end position.

2. An apparatus as claimed in Claim 1, characterized in that near each side surface (36, 37) of the cassette holder (35) the spindle (58), which is rotatably mounted on the cassette holder (35), carries a gear wheel (63, 64) which meshes with a toothed portion (65, 66) having the same shape as the path of movement of the cassette holder (35) (Figures 3, 4, 5, 6).

3. An apparatus as claimed in Claim 1 or 2, characterized in that for blocking the spindle (58) against rotation by the pretensioned helical spring (56) the cassette holder (35) is provided with a latch (83) which is adapted to cooperate with a stop (82) on the spindle (58) and which is movable between a blocking position and the release position, the stop (82) being urged against said latch by the pretension of the helical spring (56) when the latch is in its blocking position and said latch being disengaged from the stop (82) when it is in its release position (Figures 3, 4, 5, 6).

4. An apparatus as claimed in Claim 3, characterized in that in its blocking position the latch (83) engages in a tooth gap (86) of the at least one gear wheel (64) on the spindle (58) and the stop (82) comprises the tooth which adjoins said tooth gap of the at least one gear wheel (64) and which is urged against the latch (83) by the pretension of the helical spring (56) (Fig. 6).

## Revendications

1. Appareil d'enregistrement et/ou de reproduction pour un support d'enregistrement logé dans une cassette (2), comportant un compartiment à cassette (35) présentant au moins une face principale (38, 39, 40) et deux faces latérales (36, 37), qui est guidé de manière à être déplaçable parallèlement à ses faces latérales (36, 37), suivant un trajet s'étendant au moins pour partie perpendiculairement à sa face principale, entre une première position d'extrémité et une seconde position d'extrémité, dont l'une est une position de chargement dans laquelle une cassette (2) orientée avec ses parois principales parallèles à la face principale (38, 39, 40) du compartiment à cassette, peut être insérée dans ce compartiment à cassette (35) et dans laquelle une cassette insérée est en contact par une paroi principale avec la face principale (39, 40), et dont l'autre est une position de fonctionnement, et sur lequel agit au moins un ressort de déplacement (56) qui le déplace de la première vers la seconde position d'extrémité et qui, dans la seconde position d'extrémité, le maintient au moins contre une butée (80), et qui peut être arrêté au moyen d'un dispositif d'arrêt libérable, dans la première position d'extrémité, à l'encontre de la sollicitation du ressort de déplacement (56), caractérisé en ce que, dans le compartiment à cassette (35) est monté à rotation au moins un arbre (58) s'étendant perpendiculairement aux faces latérales (36, 37) de ce compartiment, sur lequel est calée au moins une roue dentée (63, 64) qui est en prise avec une denture (65, 66) présentant la même extension que le trajet du compartiment à cassette (35), et que le ressort de déplacement (56) est formé par un ressort de torsion hélicoïdal cylindrique enroulé avec précontrainte autour de l'arbre (58), qui est en prise par une extrémité (59) avec le compartiment à cassette (35) et par son autre extrémité (60) avec l'arbre (58) et qui, après la libération du dispositif d'arrêt (57), entraîne par sa précontrainte l'arbre (58) et la roue dentée (63, 64) fixée sur celui-ci, de sorte que la roue dentée roule sur la denture (65, 66) et déplace le compartiment à cassette (35) de la première position d'extrémité vers la seconde.

2. Appareil suivant la revendication 1, caractérisé en ce que, sur l'arbre (58) tourillonnant dans le compartiment à cassette (35), dans la zone de chaque face latérale (36, 37) du compartiment à cassette (35) est fixée (Fig. 3, 4, 5, 6) une roue dentée (63, 64) en prise avec une denture (65, 66) présentant la même extension que le trajet du compartiment à cassette (35).

3. Appareil suivant la revendication 1 ou 2, caractérisé en ce que, pour le blocage de l'entraînement en rotation de l'arbre (58) à l'aide du ressort de torsion hélicoïdal précontraint (56), un verrou (83) prévu pour coopérer avec une butée (82) reliée à l'arbre (58) et déplaçable entre une position de blocage et une position de libération est prévu sur le compartiment à cassette (35), étant entendu que la butée (82) prend appui contre le verrou dans sa position de blocage sous la précontrainte du ressort de torsion hélicoïdal (56) et que cette butée (82) est libérée dans la position de libération du verrou (Fig. 3, 4, 5, 6).

4. Appareil suivant la revendication 3, caractérisé en ce que le verrou (83) s'étend, dans sa position de blocage, dans un entredent (86) de la au moins une roue dentée (64) fixée sur l'arbre (58) et la butée (82) est formée (Fig. 6) de la au moins une roue dentée (64) par la dent adjacente à cet entredent et prenant appui contre le verrou (83) sous la précontrainte du ressort de torsion hélicoïdal (56).

Fig.1

Fig.2

EP 0 197 610 B1

Fig.3

Fig.4

Fig.5

Fig.6